# EUROPÄISCHE PATENTSCHRIFT

(11) **EP 0 656 450 B1**
(45) Veröffentlichungstag und Bekanntmachung des Hinweises auf die Patenterteilung: **15.07.1998**
(21) Anmeldenummer: 94890187.1
(22) Anmeldetag: 03.11.1994
(51) Int. Cl.: E04B 1/74, F24J 2/04, F24J 2/34

(54) **Verfahren zur Errichtung von Wänden, insbesondere der Aussenwände eines Bauwerkes, mittels Schalungselementen**
Method of erecting walls, in particular the outer walls of a building, using form elements
Procédé servant à l'érection des murs, en particulier murs extérieurs d'un bâtiment, au moyen d'éléments pour constructions à coffrage

(30) Priorität: 23.11.1993 AT 2371/93
(43) Veröffentlichungstag der Anmeldung: 07.06.1995
(73) Patentinhaber: ERI Energie-Ressourcen Institut Forschungs- und Entwicklungs-GmbH, 6382 Kirchdorf in Tirol (AT)
(72) Erfinder: Schwarz, Alois, 6382 Kirchdorf in Tirol (AT)
(74) Vertreter: Atzwanger, Richard, Dipl.-Ing. Patentanwalt

(56) Entgegenhaltungen:
- EP-A- 0 049 790
- EP-A- 0 491 394
- WO-A-88/08906
- WO-A-92/17741
- FR-A- 2 345 562
- GB-A- 2 152 966

## Beschreibung

Die gegenständliche Erfindung betrifft ein Verfahren zur Errichtung von Wänden, insbesondere von Außenwänden, eines Bauwerkes, mittels Schalungselementen, welche mit Isoliereinlagen ausgebildet sind, wobei der Innenraum der Schalungselemente in Längsrichtung der Wände mittels einer Schichte aus einem wärmeisolierenden Material in zwei Bereiche unterteilt wird.
Die Erfindung betrifft weiters ein Schalungselement zur Errichtung von Wänden eines Bauwerkes.

Aus der GB-A-2 152 966 ist ein Bauelement für die Errichtung von Betonwänden bekannt, welches aus zwei Teilen besteht, zwischen welchen sich eine aus einem isolierenden Material gefertigte Schichte befindet. Der Zweck dieses Bauelementes besteht darin, Wände mit einer verbesserten Wärmedämmung errichten zu können.

Aus der DE-A1-1 916 400 ist ein Schalungsstein bekannt, welcher mit einer Einlage aus isolierendem Material ausgebildet ist. Auch dieses Bauelement dient dazu, Wände mit einer verbesserten Wärmedämmung errichten zu können.

Der gegenständlichen Erfindung liegt die Erkenntnis zugrunde, daß in einem Umweltkollektor gewonnene Wärme und Kälte dann zur Klimatisierung von in Bauwerken befindlichen Räumen herangezogen werden kann, soferne das vom Umweltkollektor abgegebene Trägermedium zur Erwärmung oder Abkühlung von Wänden des Bauwerkes verwendet wird. Es muß dabei berücksichtigt werden, daß die in Räumen von Bauwerken herrschende Temperatur auf einem konstanten Wert von etwa 22°C bis 25°C gehalten werden soll, wogegen die außerhalb des Bauwerkes herrschende Umgebungstemperatur großen Schwankungen unterliegt, welche zudem innerhalb kurzer Zeiträume eintreten können.

Der gegenständlichen Erfindung liegt demnach die Aufgabe zugrunde, ein Verfahren zur Herstellung von Wänden zu schaffen, durch welche im Zusammenwirken mit einem Umweltkollektor die Räume dieses Bauwerkes beheizt bzw. gekühlt werden können. Dies wird erfindungsgemäß dadurch erzielt, daß in den an der Innenseite der Wände liegenden Bereich eine Schichte aus einem wärmespeichernden Material eingebracht wird, daß in den an der Außenseite der Wände liegenden Bereich eine Schichte aus einem gut wärmeleitenden Material eingebracht wird und daß mindestens in die Schichte aus wärmespeicherndem Material in an sich bekannter Weise ein Rohr zur Leitung eines Trägermediums für Wärme oder Kälte eingebracht wird.

Durch die Schichte aus gut wärmeleitendem Material paßt sich die Temperatur in dieser Schichte an die klimatischen Gegebenheiten an. Demgegenüber wird die Schichte aus gut wärmespeicherndem Material mit Wärme oder Kälte aus dem Umweltkollektor beaufschlagt, wodurch die gewünschte Klimatisierung des Bauwerkes erzielt wird. Durch die isolierende Schichte wird gewährleistet, daß die in der inneren, aus gut wärmespeicherndem Material bestehenden Schichte auf der gewünschten Temperatur gehalten wird.

Vorzugsweise wird auch in die Schichte aus gut wärmeleitendem Material ein Rohr zur Leitung eines Trägermediums für Wärme oder für Kälte eingebracht. Mittels des Trägermediums, welches dasjenige Rohr durchströmt, welches sich in der Schichte aus wärmespeicherndem Material befindet, wird der dem Raum zugewandte Bereich der Mauer auf die gewünschte Raumtemperatur gebracht. Aufgrund der wärmespeichernden Eigenschaften dieser Schichte wird das angestrebte Temperaturniveau auf einem weitgehend konstanten Wert gehalten. Demgegenüber wird mittels des Trägermediums, welches dasjenige Rohr durchströmt, welches sich in der Schichte aus gut wärmeleitendem Material befindet, in Abhängigkeit von den allenfalls sich rasch ändernden Außentemperaturen eine rasche Erwärmung oder eine rasche Abkühlung des äußeren Bereiches der Wände erzielt, um die angestrebte Raumtemperatur beibehalten zu können. Durch die zwischen diesen beiden Schichten befindliche isolierende Schichte wird die Übertragung der Außentemperatur in die Räume behindert.

Vorzugsweise ist die Schichte aus gut wärmeleitendem Material als statisch tragende Schichte ausgebildet. Weiters ist vorzugsweise diese Schichte aus Beton mit einem Zuschlag aus wärmeleitendem Material, wie einem Metallpulver, hergestellt. Demgegenüber ist vorzugsweise die Schichte aus wärmespeicherndem Material aus Ton, Lehm, Leichtbeton od.dgl. gebildet. Die Schichte aus wärmeisolierendem Material kann aus Steinwolle, Glaswolle, Schlackenwolle, Kork od.dgl. gebildet sein.

Nach einem bevorzugten Ausführungsbeispiel weist die Schichte aus wärmespeicherndem Material angenähert die doppelte Dicke als die Schichten aus gut wärmeleitendem Material und aus isolierendem Material auf.

Aus der EP-A-0 491 394 ist weiters ein Bauelement bekannt, bei welchem zwei zueinander parallel ausgerichtete Platten durch scharnierartige Zugglieder miteinander verbunden sind. Dieses Bauelement ist jedoch nicht dafür vorgesehen, mit isolierenden Platten ausgebildet zu werden.

Demgegenüber besteht ein Schalungselement zur Durchführung eines erfindungsgemäßen Verfahrens aus zwei Platten, welche mittels an diesen scharnierartig angelenkten Querstegen verbunden sind, wobei erfindungsgemäß die Querstege mit Leisten zur Befestigung von in Längsrichtung der Platten ausgerichteten Einsätzen aus einem isolierenden Material ausgebildet sind. Hierdurch kann ein derartiges Schalungselement in einfacher Weise mit Einsätzen aus isolierendem Material ausgestattet werden.

Das erfindungsgemäße Verfahren und ein Schalungselement zu dessen Durchführung sind nachstehend anhand von in der Zeichnung dargestellten Ausführungsbeispielen näher erläutert. Es zeigen:
- Fig. 1: eine nach dem erfindungsgemäßen Verfahren errichtete Wand, in Draufsicht,
- Fig. 2: den Schnitt durch diese Wand, nach der Linie A-A der Fig. 1, und die Fig. 3 und 4 ein erfindungsgemäßes Schalungselement, in zwei unterschiedlichen Stellungen.

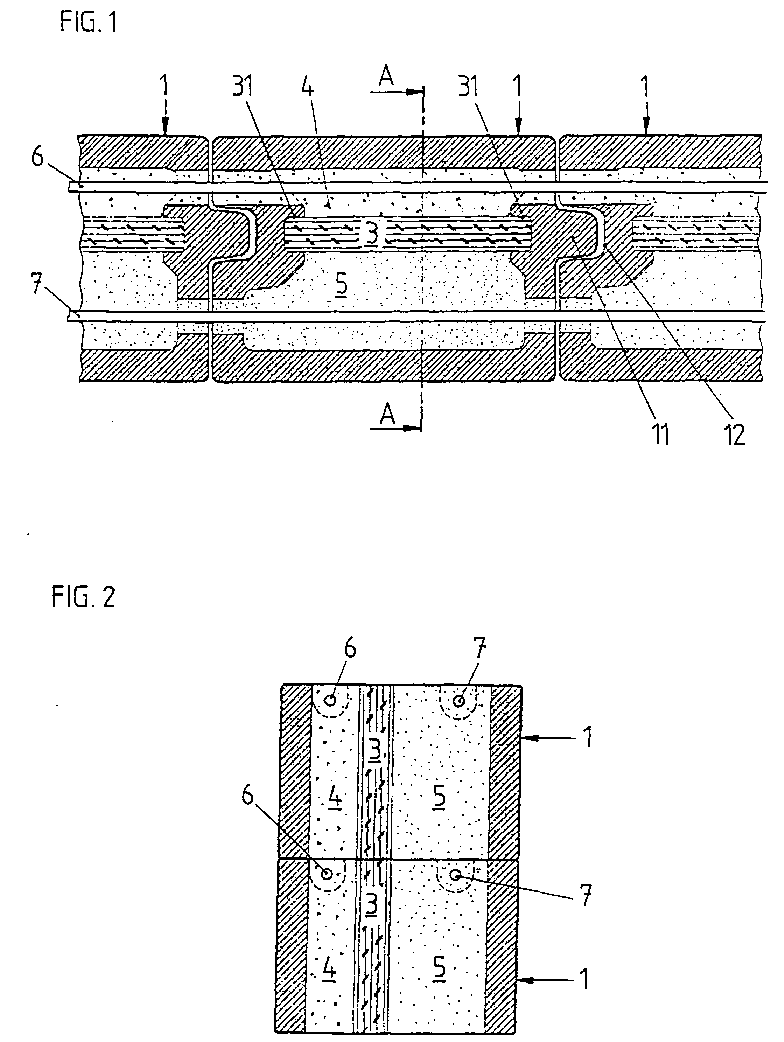

Wie aus Fig. 1 ersichtlich ist, wird die Wand eines Bauwerkes dadurch errichtet, daß mit zwei Längswänden und mit Querwänden ausgebildete Schalungssteine 1 scharweise nebeneinander und übereinander versetzt werden. Diese Schalungssteine 1 sind an den Außenseiten der Querwände mit einer Feder 11 und mit einer entsprechenden Nut 12 ausgebildet. Der Innenraum der Schalungssteine 1 ist durch eine Platte 3 aus isolierendem Material in zwei Bereiche unterteilt. Die Platte 3 ist in zwei Nuten 31, welche an den Innenseiten der Querwände vorgesehen sind, eingesetzt.

In den der Außenseite der Wand zugeordneten Bereich wird eine Schichte 4 aus einem gut wärmeleitenden Material eingebracht. In den innenseitig liegenden Bereich wird eine Schichte 5 aus einem wärmespeichernden Material eingebracht. An der Oberseite dieser Schichten werden Rohre 6 und 7 verlegt, welche mit einem Trägermedium zur Zufuhr von Wärme oder Kälte gespeist werden können.

Die Schalungssteine 1 sind vorzugsweise aus zementgebundener oder kunststoffgebundener mineralisierter Holzwolle, aus Stroh oder aus einem anderen isolierenden Material gefertigt.
Die Schichte 3 ist durch eine Platte aus Glaswolle, Steinwolle, Schlackenwolle, Kork od.dgl. gebildet.
Die Schichte 4, welche statisch tragend ist, besteht aus Beton mit zur Erhöhung von dessen Wärmeleitfähigkeit dienenden Zuschlägen, wie Metallpulver.
Die Schichte 5 besteht aus Ton, Lehm oder Beton mit wärmespeichernden Zuschlägen.

Ein aus einem Umweltkollektor zugeführtes Trägermedium für Wärme oder Kälte wird durch die Rohre 6 hindurchgeleitet, wobei in Abhängigkeit von den bestehenden Außentemperaturen der der Außenseite des Gebäudes zugewandte Bereich der Wand erwärmt oder abgekühlt wird. Da die Schichte 4 aus gut wärmeleitendem Material hergestellt ist, paßt sich deren Temperatur den klimatischen Gegebenheiten entsprechend rasch an.
Demgegenüber wird die Schichte 5 durch das durch die Rohre 7 hindurchströmende Trägermedium auf angenähert diejenige Temperatur gebracht, welche in den Räumen angestrebt wird. Da die Schichte 5 aus einem gut wärmespeichernden Material gefertigt ist, wird ein gleichmäßiges Temperaturniveau gewährleistet.

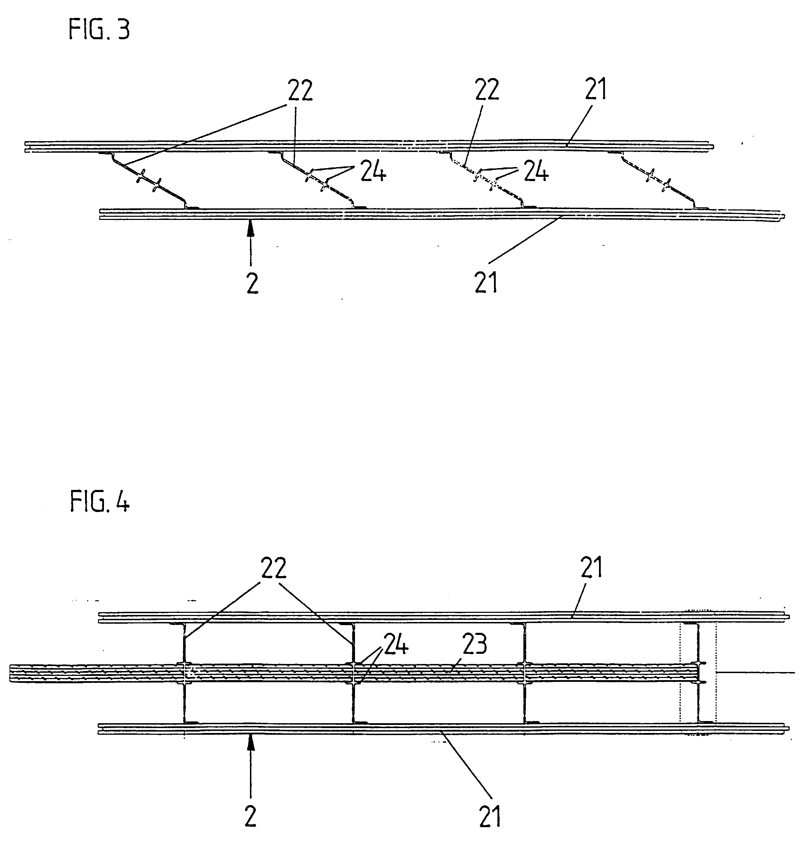

Das in den Fig. 3 und 4 dargestellte Schalungselement 2 besteht aus zwei aus isolierendem Material gefertigten Platten 21, welche mittels scharnierartig angelenkten Stegen 22 miteinander verbunden sind. Die Stege 22 sind mit Leisten 24 ausgebildet, in welche Platten 23 aus isolierendem Material eingesetzt werden können. Zur Errichtung einer Wand werden in die Räume zwischen den Platten 22 und 23 Schichten aus einem gut wärmeleitenden Material bzw. aus einem wärmespeichernden Material eingebracht. Weiters werden Rohre zur Führung eines Trägermediums eingelegt.

Der besondere Vorteil derartiger Schalungselemente besteht darin, daß sie im zusammengeklappten Zustand auf Baustellen verbracht werden können. Dort werden sie mit den Platten 23 versehen, wodurch sie in der für die Verfüllung mit den anderen Schichten erforderlichen Lage gehalten werden.

Das erfindungsgemäße Verfahren ist insbesondere zur Errichtung von Außenwänden von Bauwerken bestimmt, welche dann mittels eines von einem Umweltkollektor abgegebenen Trägermediums erwärmt oder abgekühlt werden. Das Verfahren kann jedoch auch für die Errichtung von Innenwänden herangezogen werden.
Als Umweltkollektoren können Sonnenkollektoren, Wärmekollektoren, Erdspeicher od.dgl. verwendet werden.

## Patentansprüche

1. Verfahren zur Errichtung von Wänden, insbesondere von Außenwänden, eines Bauwerkes, mittels Schalungselementen (1), welche mit Isoliereinlagen ausgebildet sind, wobei der Innenraum der Schalungselemente (1) in Längsrichtung der Wände mittels einer Schichte (3) aus einem wärmeisolierenden Material in zwei Bereiche unterteilt wird, dadurch gekennzeichnet, daß in den an der Innenseite der Wände liegenden Bereich eine Schichte (5) aus einem wärmespeichernden Material eingebracht wird, daß in den an der Außenseite der Wände liegenden Bereich eine Schichte (4) aus einem gut wärmeleitenden Material eingebracht wird und daß mindestens in die Schichte (5) aus wärmespeicherndem Material in an sich bekannter Weise ein Rohr (7) zur Leitung eines Trägermediums für Wärme oder Kälte eingebracht wird.

2. Verfahren nach Patentanspruch 1, dadurch gekennzeichnet, daß auch in die Schichte (4) aus gut wärmeleitendem Material ein Rohr (6) zur Leitung eines Trägermediums für Wärme oder für Kälte eingebracht wird.

3. Verfahren nach einem der Patentansprüche 1 und 2, dadurch gekennzeichnet, daß die Schichte (4) aus gut wärmeleitendem Material als statisch tragende Schichte ausgebildet ist.

4. Verfahren nach einem der Patentansprüche 1 bis 3, dadurch gekennzeichnet, daß die Schichte (4) aus gut wärmeleitendem Material aus Beton mit einem Zuschlag aus wärmeleitendem Material, wie einem Metallpulver, hergestellt ist.

5. Verfahren nach einem der Patentansprüche 1 bis 4, dadurch gekennzeichnet, daß die Schichte (5) aus wärmespeicherndem Material aus Ton, Lehm, Leichtbeton od.dgl. gebildet ist.

6. Verfahren nach einem der Patentansprüche 1 bis 5, dadurch gekennzeichnet, daß die Schichte (3) aus wärmeisolierendem Material aus Steinwolle, Glaswolle, Schlackenwolle, Kork od.dgl. gebildet ist.

7. Verfahren nach einem der Patentansprüche 1 bis 6, dadurch gekennzeichnet, daß die Schichte (5) aus wärmespeicherndem Material angenähert die doppelte Dicke als die Schichten (4, 3) aus gut wärmeleitendem Material und aus isolierendem Material aufweist.

8. Schalungselement zur Durchführung des Verfahrens nach einem der Patentansprüche 1 bis 7, welches aus zwei Platten (21) besteht, welche mittels an diesen scharnierartig angelenkten Querstegen (22) verbunden sind, dadurch gekennzeichnet, daß die Querstege (22) mit Leisten (24) zur Befestigung von in Längsrichtung der Platten (21) ausgerichteten Einsätzen (23) aus einem isolierenden Material ausgebildet sind.

## Claims

1. A method for the erection of walls, especially external walls, of a building, by means of formwork elements (1) which are constructed with insulating inserts, the inner space in the formwork elements (1) being subdivided into two areas in the longitudinal direction of the walls by means of a layer (3) of a heat-insulating material, characterised in that a layer (5) of a heat-accumulating material is inserted into the area lying on the inside of the walls, in that a layer (4) of a material exhibiting good heat conductivity is inserted into the area lying on the outside of the walls and in that a pipe (7) for conveying a medium acting as a heat transfer medium or coolant is inserted in a manner known per se at least into the layer (5) of heat-accumulating material.

2. A method according to claim 1, characterised in that a pipe (6) for conveying a medium acting as a heat transfer medium or coolant is also inserted into the layer (4) of material exhibiting good heat conductivity.

3. A method according to either one of claims 1 and 2, characterised in that the layer (4) of material exhibiting good heat conductivity is constructed as a statically load-bearing layer.

4. A method according to any one of claims 1 to 3, characterised in that the layer (4) of material exhibiting good heat conductivity is made of concrete with the addition of a heat-conducting material, such as a metal powder.

5. A method according to any one of claims 1 to 4, characterised in that the layer (5) of heat-accumulating material is formed of clay, loam, lightweight concrete or the like.

6. A method according to any one of claims 1 to 5, characterised in that the layer (3) of heat-insulating material is formed of rock wool, glass wool, mineral wool, cork or the like.

7. A method according to any one of claims 1 to 6, characterised in that the layer (5) of heat-accumulating material is approximately twice as thick as the layers (4, 3) of material exhibiting good heat conductivity and insulating material.

8. A formwork element for carrying out the method according to any one of claims 1 to 7, consisting of two plates (21) which are connected by means of transverse webs (22) coupled hingedly thereto, characterised in that the transverse webs (22) are constructed with strips (24) for attaching inserts (23) of an insulating material oriented in the longitudinal direction of the plates (21).

## Revendications

1. Procédé de construction de murs, en particulier de murs extérieurs d'ouvrages, au moyen d'éléments de coffrage (1), qui comportent des garnitures d'isolation, le volume intérieur des éléments de coffrage (1) étant partagé, en direction de la longueur des murs, en deux zones, au moyen d'une couche (3) faite d'un matériau thermiquement isolant, caractérisé en ce que dans la zone, située sur le côté intérieur des murs, est placée une couche (5) faite d'un matériau accumulant la chaleur, en ce que dans la zone, située sur le côté extérieur des murs, est placée une couche (4) faite d'un matériau bon conducteur de chaleur et en ce qu'au moins dans la couche (5) faite d'un matériau accumulant la chaleur, est placé, de manière connue en soi, un tube (7) pour la conduite d'un fluide de transport pour la chaleur ou le froid.

2. Procédé selon la revendication 1, caractérisé en ce que dans la couche (4) aussi, faite d'un matériau bon conducteur de chaleur, est placé un tube (6) pour la conduite d'un fluide de transport pour la chaleur ou le froid.

3. Procédé selon l'une des revendications 1 et 2, caractérisé en ce que la couche (4) en matériau bon conducteur de chaleur est une couche statiquement portante.

4. Procédé selon l'une des revendications 1 à 3, caractérisé en ce que la couche (4) en matériau bon conducteur de chaleur est fabriquée en béton avec un granulat en matériau bon conducteur de chaleur, tel qu'une poudre métallique.

5. Procédé selon l'une des revendications 1 à 4, caractérisé en ce que la couche (5) en matériau accumulant la chaleur est faite d'argile, limon, béton léger ou similaire.

6. Procédé selon l'une des revendications 1 à 5, caractérisé en ce que la couche (3) en matériau thermiquement isolant est faite de laine de roche, de laine de verre, de laine de laitier, de liège ou similaire.

7. Procédé selon l'une des revendications 1 à 6, caractérisé en ce que la couche (5) en matériau accumulant la chaleur a une épaisseur approximativement double de celle des couches (4,3) en matériau bon conducteur de chaleur et en matériau isolant.

8. Elément de coffrage pour la mise en oeuvre du procédé selon l'une des revendications 1 à 7, qui est constitué de deux plaques (21), qui sont reliées au moyen de traverses (22), articulées à la manière d'une charnière sur celles-ci, caractérisé en ce que les traverses (22) présentent des baguettes (24) pour la fixation d'inserts (23) faits d'un matériau isolant, orientés dans la direction longitudinale des plaques (21).
